# EUROPÄISCHE PATENTSCHRIFT

(11) **EP 3 723 937 B1**
(45) Veröffentlichungstag und Bekanntmachung des Hinweises auf die Patenterteilung: **29.05.2024**
(21) Anmeldenummer: 18830183.2
(22) Anmeldetag: 13.12.2018
(51) Int. Cl.: B25B 11/00, B23K 26/16, B23K 37/04

(54) **WERKSTÜCKAUFLAGE EINER BEARBEITUNGSMASCHINE ZUM BEARBEITEN VON WERKSTÜCKEN SOWIE BEARBEITUNGSMASCHINE MIT EINER WERKSTÜCKAUFLAGE**
WORKPIECE SUPPORT OF A MACHINE TOOL FOR MACHINING WORKPIECES AND MACHINE TOOL HAVING A WORKPIECE SUPPORT
SUPPORT DE PIÈCES D'UNE MACHINE-OUTIL POUR L'USINAGE DE PIÈCES AINSI QUE MACHINE-OUTIL POURVUE D'UN SUPPORT DE PIÈCES

(30) Priorität: 15.12.2017 DE 102017222860
(43) Veröffentlichungstag der Anmeldung: 21.10.2020
(73) Patentinhaber: Trumpf Laser- und Systemtechnik GmbH, 71254 Ditzingen (DE)
(72) Erfinder: BLASER, Martin, 88267 Vogt (DE); FISCHER, Gunter, 71297 Moensheim (DE)
(74) Vertreter: Trumpf Patentabteilung
(86) Internationale Anmeldenummer: PCT/EP2018/084806
(87) Internationale Veröffentlichungsnummer: WO 2019/115715

(56) Entgegenhaltungen:
- DE-A1- 19 920 058
- DE-U1-202013 010 402
- JP-A- 2002 273 594

## Beschreibung

Die Erfindung betrifft eine Werkstückauflage einer Bearbeitungsmaschine zum Bearbeiten von Werkstücken,
- mit einem flächigen Werkstück-Lagerungselement, das eine Werkstückseite zur Lagerung eines Werkstücks während der Werkstückbearbeitung sowie eine von der Werkstückseite abliegende Unterseite aufweist und das von der Werkstückseite zu der Unterseite hin für einen mit bearbeitungsbedingten Emissionen befrachteten Abluftstrom durchlässig ist sowie
- mit einer Absaugvorrichtung, die einen Unterdruckerzeuger und eine Absaugleitung umfasst, wobei mittels des Unterdruckerzeugers der von der Werkstückseite zu der Unterseite des Werkstück-Lagerungselements gerichtete Abluftstrom erzeugbar, mit einer Strömungsrichtung in die Absaugleitung absaugbar und anschließend über die Absaugleitung abführbar ist und wobei die Absaugleitung eine stromabwärts der Werkstückseite des Werkstück-Lagerungselements angeordnete lagerungselementseitige Absaugöffnung mit einem Strömungsquerschnitt mit einer Öffnungsweite aufweist und der Strömungsquerschnitt der Absaugöffnung der Absaugleitung aufgrund der Öffnungsweite von dem Abluftstrom in der Strömungsrichtung passierbar ist.

Die Erfindung betrifft des Weiteren eine Bearbeitungsmaschine zum vorzugsweise thermischen Bearbeiten von Werkstücken, mit einer Bearbeitungsvorrichtung sowie mit einer Werkstückauflage der vorstehenden Art, mittels derer ein Werkstück während der Bearbeitung durch die Bearbeitungsvorrichtung lagerbar ist.

Gattungsgemäßer Stand der Technik ist bekannt aus JP S2002273594 A. Diese Druckschrift offenbart eine Werkstückauflage mit einem Auflagerost, der an seiner Oberseite Werkstücke während einer thermischen Bearbeitung lagert. Aufgrund der thermischen Werkstückbearbeitung kommt es an der Oberseite des Auflagerostes zu bearbeitungsbedingten Emissionen. Von der Bearbeitungsstelle an dem betreffenden Werkstück emittiert werden insbesondere Gase und feine Feststoffpartikel. In einem kastenartigen Unterbau des Auflagerostes sind drei zu dem Auflagerost hin offene und durch Trennwände voneinander getrennte Kammern der Werkstückauflage ausgebildet. In jeder der Kammern verlaufen unterhalb des Auflagerostes drei Absaugleitungen einer Absaugvorrichtung parallel zueinander und parallel zu dem Auflagerost. Die Wand der Absaugleitungen ist mit Absaugöffnungen versehen. An beiden Längsenden stoßen die drei Absaugleitungen einer Kammer der Werkstückauflage jeweils an eine in Querrichtung der Absaugleitungen verlaufende Sammelleitung. Ein zu den Absaugleitungen hin liegendes Wandelement einer jeden Sammelleitung ist in Querrichtung der Absaugleitungen verschiebbar und mit drei in der Verschieberichtung aufeinanderfolgenden Wandöffnungen versehen, deren Kontur jeweils dem freien Querschnitt einer der drei Absaugleitungen entspricht. Die verschiebbaren Wandelemente der Sammelleitungen können wahlweise in eine Offenstellung, in welcher jede der Wandöffnungen der Wandelemente mit dem Innern einer der Absaugleitungen fluchtet oder in eine Geschlossenstellung bewegt werden, in welcher die Absaugleitungen an einem ihrer Enden jeweils durch einen geschlossenen Bereich der verschiebbaren Wandelemente verschlossen sind. Liegt bei Offenstellung der verschiebbaren Wandelemente der Sammelleitungen an letzteren ein mittels einer Vakuumpumpe der Absaugvorrichtung erzeugter Unterdruck an, so wird Abluft, die mit bearbeitungsbedingten Emissionen befrachtet ist, unter der Wirkung des Unterdrucks von der Oberseite des Auflagerostes zu den Absaugleitungen und durch die Absaugöffnungen der Absaugleitungen in deren Inneres abgesaugt. Von dort gelangt die Abluft durch die mit dem Innern der Absaugleitungen fluchtenden Wandöffnungen der verschiebbaren Wandelemente in die Sammelleitungen. Über die Sammelleitungen wird die Abluft schließlich aus dem Nahbereich der Werkstückauflage abgeführt. Rechnergesteuert wird stets nur das verschiebbare Wandelement der Saugleitung an derjenigen Kammer der Werkstückauflage in die Offenstellung bewegt, oberhalb derer eine Werkstückbearbeitung stattfindet. Die verschiebbaren Wandelemente an den übrigen Kammern der Werkstückauflage befinden sich in der Geschlossenstellung und trennen folglich die Absaugleitungen im Innern der betreffenden Kammern der Werkstückauflage von der an die Sammelleitungen angeschlossenen Vakuumpumpe der Absaugvorrichtung.

Die Abstimmung der Absaugung von bearbeitungsbedingten Emissionen auf die konkreten Bearbeitungsverhältnisse gegenüber dem Stand der Technik zu verbessern, ist Aufgabe der vorliegenden Erfindung.

Erfindungsgemäß gelöst wird diese Aufgabe durch die Werkstückauflage gemäß Patentanspruch 1 und durch die Bearbeitungsmaschine gemäß Patentanspruch 14.

Im Falle der Erfindung ist die Öffnungsweite des Strömungsquerschnitts einer Absaugöffnung, durch welche mit bearbeitungsbedingten Emissionen befrachtete Abluft von der Oberseite eines Werkstück-Lagerungselements in eine Absaugleitung abgesaugt wird, variabel einstellbar. Es besteht demnach die Möglichkeit, die Absaugöffnung bedarfsabhängig mehr oder weniger weit zu öffnen und dadurch die an der Absaugleitung verfügbare und von dem Unterdruckerzeuger der erfindungsgemäßen Absaugvorrichtung bereitzustellende Absaugleistung an die konkrete Prozess- beziehungsweise Maschinenanwendung anzupassen. Ergänzend oder alternativ ist erfindungsgemäß vorgesehen, dass die Position der Absaugöffnung variabel ist. Aufgrund einer Positionsänderung der Absaugöffnung ändert sich der Ort, an welchem die Absaugleistung an der Werkstückauflage bereitgestellt wird. Vorzugsweise ist die Absaugleitung an der Unterseite des Werkstück-Lagerungselements und dort in einem abgegrenzten Absaugraum der Werkstückauflage angeordnet.

Besondere Ausführungsarten der Werkstückauflage gemäß Patentanspruch 1 und der Bearbeitungsmaschine gemäß Patentanspruch 14 ergeben sich aus den abhängigen Patentansprüchen 2 bis 13 und 15.

Gemäß den Patentansprüchen 2 und 6 wird die Öffnungsweite des Strömungsquerschnitts und/oder die Position einer oder mehrerer Absaugöffnungen der Absaugleitung variiert, indem ein mit einer oder mehreren Absaugöffnungen versehenes Wandelement einer Leitungswand der Absaugleitung gegen ein Wandelement ausgetauscht wird, dessen Absaugöffnung(en) sich hinsichtlich der Öffnungsweite ihres Strömungsquerschnitts und/oder hinsichtlich ihrer Position in Einbaulage von der oder den Ansaugöffnungen an dem auszutauschenden Wandelement unterscheiden. Das neue Wandelement wird aus einer Mehrzahl von zur Auswahl stehenden Wandelementen ausgewählt und anstelle des bis dato montierten Wandelements mit einem dauerhaft angebrachten Wandteil der Absaugleitung zu der Leitungswand der Absaugleitung lösbar kombiniert.

In bevorzugter Ausgestaltung der Erfindung ist vorgesehen, dass die Leitungswand der Absaugleitung mehrere lösbare und folglich austauschbare Wandelemente aufweist. Sind mehrere lösbare Wandelemente gleichzeitig mit dem dauerhaft angebrachten Wandteil verbindbar und unterscheiden sich diese lösbaren Wandelemente hinsichtlich der bei Einbaulage eingenommenen Position ihrer Absaugöffnungen voneinander, so können die mittels der lösbaren Wandelemente eingestellten Absaugverhältnisse auch durch Vertauschen der lösbaren Wandelemente untereinander variiert werden.

Ergänzend oder alternativ ist in Weiterbildung der Erfindung vorgesehen, dass die Öffnungsweite des Strömungsquerschnitts einer oder mehrerer Absaugöffnungen modifiziert werden kann, indem eine mit einer oder mehreren Durchlassöffnungen für den Abluftstrom versehene Leitungswand der Absaugleitung und ein gleichfalls mit zumindest einer Durchlassöffnung für den Abluftstrom versehenes Stellelement in einer senkrecht zu der Strömungsrichtung des Abluftstroms verlaufenden Zustellrichtung relativ zueinander zustellbar sind (Patentansprüche 3, 7). Durchlassöffnungen an der Leitungswand der Absaugleitung und an dem Stellelement sind einander paarweise zugeordnet, wobei die einander zugeordneten Durchlassöffnungen an der Leitungswand der Absaugleitung und an dem Stellelement in Querrichtung der Strömungsrichtung des Abluftstroms eine gegenseitige Überdeckung aufweisen. In Abhängigkeit von dem durch die Zustellbewegung der Leitungswand der Absaugleitung und/oder des Stellelements einstellbaren Umfang der gegenseitigen Überdeckung der beiderseitigen Durchlassöffnungen ergibt sich die Öffnungsweite des resultierenden Strömungsquerschnitts der von den Durchlassöffnungen an der Leitungswand der Absaugleitung und an dem Stellelement gebildeten Absaugöffnung(en) der Absaugleitung.

Ausweislich der Patentansprüche 4 und 8 sind im Falle einer weiteren Erfindungsbauart mehrere mit einer oder mit mehreren Durchlassöffnungen versehene Stellelemente vorgesehen, die zur bedarfsabhängigen Einstellung der Öffnungsweite des Strömungsquerschnittes der Absaugöffnung(en) der Absaugleitung relativ zu der mit einer oder mehreren Durchlassöffnungen für den Abluftstrom versehenen Leitungswand der Absaugleitung und/oder relativ zueinander in der Querrichtung der Strömungsrichtung des Abluftstroms zustellbar sind.

Sowohl im Falle der Erfindungsbauarten gemäß den Patentansprüchen 3 und 7 als auch im Falle der Erfindungsbauarten gemäß den Patentansprüchen 4 und 8 kann mit einer Veränderung der Öffnungsweite des Querschnitts der Absaugöffnung(en) eine Veränderung der Position der Absaugöffnung(en) an der Absaugleitung einhergehen. Die Leitungswand der Absaugleitung kann in dem mit dem oder den Stellelementen versehenen Bereich durch ein lösbares und mit einem an der Werkstückauflage dauerhaft angebrachten Wandteil der Leitungswand verbundenes Wandelement gebildet sein. Zur Herstellung einer einfach lösbaren Verbindung mit dem dauerhaft angebrachten Wandteil der Leitungswand oder mit der Leitungswand können die austauschbaren lösbaren Wandelemente und das oder die Stellelemente in eine Führung an dem dauerhaft angebrachten Wandteil der Leitungswand oder an der Leitungswand einschiebbar sein.

Die Stellelemente und auch die lösbaren Wandelemente der Absaugleitung sind in bevorzugter Ausgestaltung der Erfindung als ebene Blechteile mit einer oder mehreren Durchlassöffnungen oder Absaugöffnungen ausgebildet. Derartige Blechteile können von dem Anwender der erfindungsgemäßen Werkstückauflage beziehungsweise der erfindungsgemäßen Bearbeitungsmaschine abgestimmt auf den konkreten Bearbeitungsfall selbst angefertigt werden.

Eine Variierung der Öffnungsweite des Strömungsquerschnitts einer oder mehrerer Absaugöffnungen der Absaugleitung durch gegenseitiges Zustellen einer mit wenigstens einer Durchlassöffnung versehenen Leitungswand der Absaugleitung und eines oder mehrerer jeweils mit wenigstens einer Durchlassöffnung versehener Stellelemente wird in weiterer Ausgestaltung der Erfindung dadurch realisiert, dass Durchlassöffnungen, die zur Erzeugung eines resultierenden Strömungsquerschnitts einander zugeordnet sind, unterschiedliche Querschnittsgeometrien aufweisen (Patentanspruch 9).

Im Interesse einer einfachen Handhabung bei der Einstellung der Öffnungsweite des Strömungsquerschnitts einer oder mehrerer Absaugöffnungen der Absaugleitung sind das oder die Stellelemente und/oder die Leitungswand der Absaugleitung an einer Führungsstruktur der Werkstückauflage relativ zueinander in der Zustellrichtung zustellbar geführt.

Die gegenseitige Zustellung einer mit wenigstens einer Durchlassöffnung versehenen Leitungswand der Absaugleitung und eines oder mehrerer jeweils mit wenigstens einer Durchlassöffnung versehener Stellelemente erfolgt im Falle einer weiteren Erfindungsbauart mittels eines gesteuert betätigbaren motorischen Zustellantriebs. Als motorischer Zustellantrieb in Frage kommt beispielsweise eine hydraulische oder eine pneumatische Kolben-Zylinder-Anordnung. Die Steuerung des motorischen Zustellantriebs ist vorzugsweise in eine übergeordnete numerische Steuerung der erfindungsgemäßen Bearbeitungsmaschine integriert. In der übergeordneten Maschinensteuerung können außerdem Informationen über die auszuführenden Bearbeitungsaufgaben hinterlegt sein, auf welche die Absaugverhältnisse an einer Absaugleitung abzustimmen sind. Alternativ besteht die Möglichkeit einer manuellen gegenseitigen Zustellung der Leitungswand der Absaugleitung und des oder der Stellelemente.

In weiterer bevorzugter Ausgestaltung der Erfindung variiert die Öffnungsdichte, mit welcher die Absaugleitung mit Absaugöffnungen belegt ist, in der Strömungsrichtung des Abluftstroms (Patentanspruch 10). Auch auf diese Weise ist die Absaugung erfindungsgemäß auf die Erfordernisse konkreter Bearbeitungsfälle abgestimmt. In einem Bereich der Absaugleitung mit einer hohen Öffnungsdichte und daraus resultierend mit einer großen Gesamt-Öffnungsweite der Strömungsquerschnitte der Absaugöffnungen steht eine höhere Absaugleistung zur Verfügung als in einem Bereich der Absaugleitung mit einer geringeren Öffnungsdichte und einer daraus resultierenden kleineren Gesamt-Öffnungsweite der Absaugöffnungen. Außerdem kann durch eine Variierung der Öffnungsdichte der Absaugöffnungen auf den Ort Einfluss genommen werden, an welchem eine größere oder eine kleinere Absaugleistung verfügbar ist. Etwa zur Bereitstellung einer über die Länge einer Absaugleitung homogenen Absaugleistung kann bei identischer Öffnungsweite der Strömungsquerschnitte der beteiligten Absaugöffnungen mit zunehmender Entfernung von der Unterdruckquelle der Absaugvorrichtung die Öffnungsdichte vergrößert werden. Durch die Vergrößerung der Öffnungsdichte der Absaugöffnungen wird der mit einer Zunahme der Entfernung des Ortes der Absaugung von der Unterdruckquelle verbundene Druckverlust kompensiert.

An der erfindungsgemäßen Werkstückauflage gemäß Patentanspruch 11 ist eine Absaugvorrichtung mit mehreren Absaugleitungen vorgesehen, wobei die Absaugleitungen unterschiedlichen Flächenbereichen des Werkstück-Lagerungselements zugeordnet sind. An wenigstens einer der Absaugleitungen ist die Öffnungsweite des Strömungsquerschnitts der Absaugöffnung(en) und/oder die Position der Absaugöffnung(en) in der vorstehenden Weise variabel einstellbar.

In bevorzugter Weiterbildung der erfindungsgemäßen Werkstückauflage mit unterschiedlichen Flächenbereichen des Werkstück-Lagerungselements zugeordneten Absaugleitungen ist die Öffnungsweite des Strömungsquerschnitts der Absaugöffnung(en) und/oder die Position der Absaugöffnung(en) an mehreren unterschiedlichen Flächenbereichen des Werkstück-Lagerungselements zugeordneten Absaugleitungen jeweils separat variierbar.

Eine mit einer derartigen Werkstückauflage versehene erfindungsgemäße Bearbeitungsmaschine ist dadurch gekennzeichnet, dass die Bearbeitungsvorrichtung zur Bearbeitung eines mittels des Werkstück-Lagerungselements der Werkstückauflage gelagerten Werkstücks eine Bearbeitungseinheit aufweist, die parallel zu dem Werkstück-Lagerungselement in eine Bearbeitungsposition zustellbar ist und dass die Öffnungsweite des Strömungsquerschnitts und/oder die Position der Absaugöffnung(en) an der ersten Absaugleitung und die Öffnungsweite des Strömungsquerschnitts der Absaugöffnung(en) an der weiteren Absaugleitung in Abhängigkeit von der Bearbeitungsposition der Bearbeitungseinheit einstellbar ist. Die voneinander unabhängige Einstellbarkeit der Absaugverhältnisse an verschiedenen Absaugleitungen der Absaugvorrichtung wird dazu genutzt, gezielt die Absaugverhältnisse an derjenigen Absaugleitung bedarfsabhängig einzustellen, welche dem für die Werkstückbearbeitung genutzten Flächenbereich des Werkstück-Lagerungsele-ments zugeordnet ist.

Gemäß Patentanspruch 12 besteht in weiterer Ausgestaltung der erfindungsgemäßen Werkstückauflage die Möglichkeit, wenigstens eine der unterschiedlichen Flächenbereichen des Werkstück-Lagerungselements zugeordneten Absaugleitungen wahlweise auf den Unterdruckerzeuger der Absaugvorrichtung aufzuschalten oder von dem Unterdruckerzeuger der Absaugvorrichtung zu trennen und dadurch zu deaktivieren.

Sind mehrere unterschiedlichen Flächenbereichen des Werkstück-Lagerungselements zugeordnete Absaugleitungen unabhängig voneinander auf den Unterdruckerzeuger der Absaugvorrichtung aufschaltbar oder von dem Unterdruckerzeuger der Absaugvorrichtung trennbar, so besteht in besonderem Maße die Möglichkeit, die Absaugleistung der erfindungsgemäßen Absaugung auf konkrete Bearbeitungsaufgaben abzustimmen (Patentanspruch 13).

Von dieser Möglichkeit macht die erfindungsgemäße Bearbeitungsmaschine gemäß Patentanspruch 15 Gebrauch. Im Falle dieser Erfindungsbauart ist lediglich die Absaugleitung für denjenigen Flächenbereich des Werkstück-Lagerungselements auf den Unterdruckerzeuger der Absaugvorrichtung aufgeschaltet, an welchem eine Werkstückbearbeitung erfolgt. Die Absaugleitungen für die übrigen Flächenbereiche des Werkstück-Lagerungselements sind von dem Unterdruckerzeuger der Absaugvorrichtung getrennt und stellen folglich keine Absaugleistung bereit.

Nachfolgend wird die Erfindung anhand beispielhafter schematischer Darstellungen näher erläutert. Es zeigen:
- Figur 1: eine Bearbeitungsmaschine für die Blechbearbeitung mit einer Werkstückauflage,
- Figur 2: die Werkstückauflage gemäß Figur 1 mit einer geöffneten Schlacke-/Schrottschublade,
- Figur 3: eine Schnittdarstellung der Werkstückauflage gemäß den Figuren 1 und 2 mit einer in Figur 2 angedeuteten Schnittebene III,
- Figur 4: eine Schnittdarstellung der Werkstückauflage gemäß den Figuren 1 bis 3 mit einer in Figur 2 angedeuteten Schnittebene IV,
- Figur 5: vier Bauarten eines lösbaren Wandelements einer Leitungswand einer an der Werkstückauflage gemäß den Figuren 1 bis 4 vorgesehenen Absaugleitung,
- Figur 6: einen von einem lösbaren Wandelement gebildeten Teil einer Leitungswand einer an der Werkstückauflage gemäß den Figuren 1 bis 4 vorgesehenen Absaugleitung mit einem relativ zu dem Wandelement in zwei unterschiedliche Positionen zugestellten Stellelement,
- Figur 7: einen Wandteil erster Bauart einer Leitungswand einer an der Werkstückauflage gemäß den Figuren 1 bis 4 vorgesehenen Absaugleitung mit einem dem Wandteil benachbarten und relativ zu dem Wandteil in drei unterschiedliche Positionen zugestellten Stellelement erster Bauart,
- Figur 8: den Wandteil der Leitungswand gemäß Figur 7 mit einem dem Wandteil benachbarten und relativ zu dem Wandteil in drei unterschiedliche Positionen zugestellten Stellelement zweiter Bauart und
- Figur 9: einen Wandteil zweiter Bauart einer Leitungswand einer an der Werkstückauflage gemäß den Figuren 1 bis 4 vorgesehenen Absaugleitung mit zwei dem Wandteil benachbarten und relativ zu dem Wandteil und relativ zueinander in unterschiedliche Positionen zugestellten Stellelementen dritter Bauart.

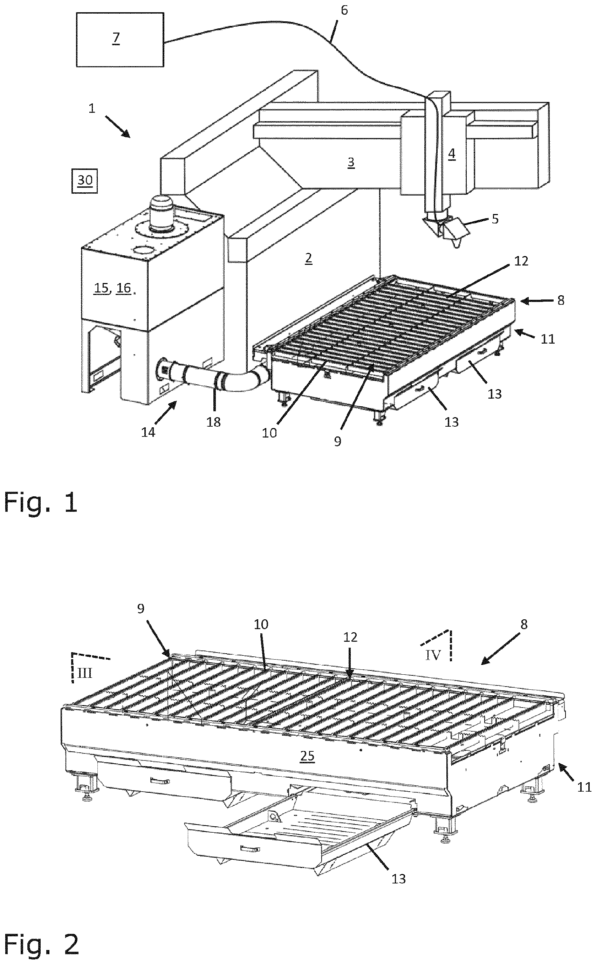

Eine in Figur 1 dargestellte Bearbeitungsmaschine ist als Laserschneidmaschine 1 ausgebildet und dient zum schneidenden Bearbeiten von Blechen. Die Laserschneidmaschine 1 umfasst in gewohnter Weise einen Maschinenkörper 2 sowie einen von dem Maschinenkörper 2 vorkragenden und längs des Maschinenkörpers 2 bewegbaren Ausleger 3. An dem Ausleger 3 ist in dessen Längsrichtung eine Bewegungseinheit 4 in horizontaler Richtung verfahrbar. Die Bewegungseinheit 4 führt ihrerseits einen in vertikaler Richtung zustellbaren und als Bearbeitungseinheit vorgesehenen Laserschneidkopf 5. Der Maschinenkörper 2, der Ausleger 3, die Bewegungseinheit 4 und der Laserschneidkopf 5 bilden eine Bearbeitungsvorrichtung der Laserschneidmaschine 1. Über ein Laserleitkabel 6 ist der Laserschneidkopf 5 mit einem Festkörperlaser 7 verbunden, der einen von dem Laserschneidkopf 5 als Schneidstrahl auf ein zu bearbeitenden Werkstück gerichteten Laserstrahl erzeugt.

Ein zu bearbeitendes Werkstück, in dem vorliegenden Beispielsfall ein nicht gezeigtes Blech, ist während der Bearbeitung auf einer vor dem Maschinenkörper 2 angeordneten und von dem Ausleger 3 der Laserschneidmaschine 1 überragten Werkstückauflage 8 abgelegt.

Die Werkstückauflage 8 weist als flächiges Werkstück-Lagerungselement einen Auflagerost 9 auf, der wie üblich von Auflageleisten 10 gebildet wird, die ihrerseits an einem kastenartigen Unterbau 11 der Werkstückauflage 8 mit gegenseitigen Abstand parallel zueinander verlaufen. Die Oberseite des Auflagerostes 9 bildet dessen Werkstückseite 12. An der Werkstückseite 12 lagert der Auflagerost 9 ein Blech während der Bearbeitung durch den Laserschneidkopf 5.

Aufgrund der zwischen den Auflageleisten 10 bestehenden Abstände ist der Auflagerost 9 in vertikaler Richtung durchlässig. Bei der thermischen Bearbeitung eines Blechs anfallende grobe Abfallteile, etwa grobe Schlackepartikel und entsprechend bemessene Blechabfälle fallen unter Schwerkraftwirkung durch den Auflagerost 9 nach unten und gelangen dadurch in Schlacke-/Schrottschubladen 13. Die Schlacke-/Schrottschubladen 13 sind an dem kastenartigen Unterbau 11 der Werkstückauflage 8 in horizontaler Richtung beweglich geführt und können zum Entleeren aus dem kastenartigen Unterbau 11 manuell herausgezogen werden. Mit einer herausgezogenen Schlacke-/Schrottschublade 13 ist die Werkstückauflage 8 in Figur 2 dargestellt.

Zusätzlich zu den unter Schwerkraftwirkung in die Schlacke-/Schrottschubladen 13 gelangenden Grobteilen werden auch bei der Blechbearbeitung mittels des Laserschneidkopfs 5 bearbeitungsbedingt anfallende Gase und feine Feststoffpartikel von der Werkstückseite 12 des Auflagerostes 9 abgeführt. Zu diesem Zweck ist die Werkstückauflage 8 mit einer Absaugvorrichtung 14 versehen.

Die Absaugvorrichtung 14 umfasst als Unterdruckerzeuger eine Vakuumpumpe 15, die in Baueinheit mit einem Entstauber 16 neben dem Maschinenkörper 2 der Laserschneidmaschine 1 angeordnet ist (Figur 1). Von dem Entstauber 16 führt eine Sammelleitung 18 der Absaugvorrichtung 14 zu dem kastenartigen Unterbau 11 der Werkstückauflage 8.

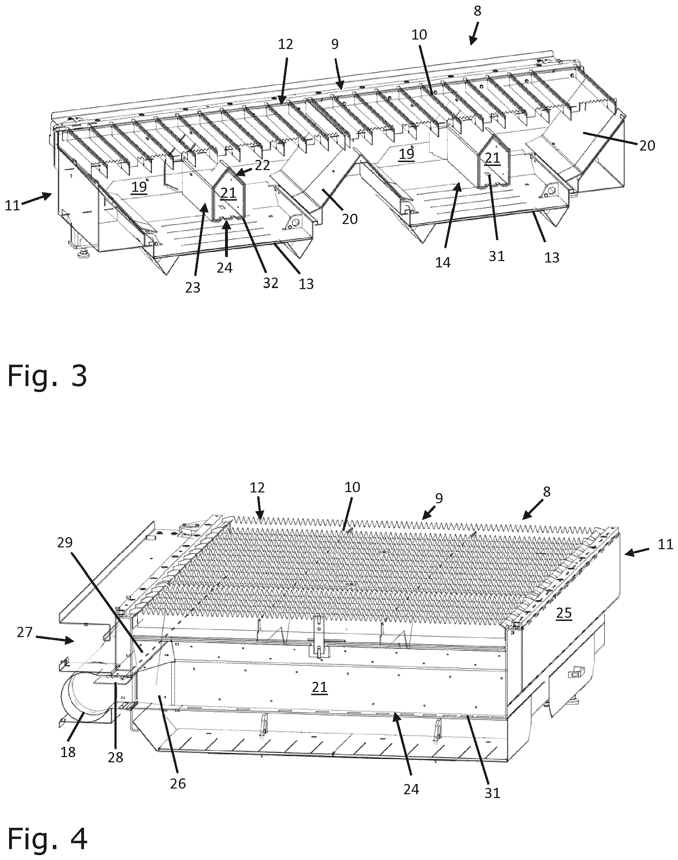

Im Innern des kastenartigen Unterbaus 11 sind ausweislich Figur 3 an der Unterseite des Auflagerostes 9 zwei Absaugräume 19 ausgebildet. Nach unten werden die Absaugräume 19 jeweils durch eine der Schlacke-/Schrottschubladen 13 begrenzt. Als seitliche Begrenzungen der Absaugräume 19 sind Leitbleche 20 vorgesehen, über welche von der Werkstückseite 12 des Auflagerostes 9 stammende Grobteile den Schlacke-/Schrottschubladen 13 zugeführt werden.

An zentraler Stelle in den Absaugräumen 19 verläuft an der Unterseite des Auflagerostes 9 jeweils eine Absaugleitung 21. Die Absaugleitungen 21 erstrecken sich parallel zu den Auflageleisten 10 des Auflagerostes 9.

Die Absaugleitungen 21 besitzen eine hausförmige Gestalt. Eine Leitungswand 22 der Absaugleitungen 21 umfasst einen an der Werkstückauflage 8 dauerhaft angebrachten Wandteil 23 sowie ein lösbares Wandelement, welches einen Boden 24 der Absaugleitungen 21 bildet.

An ihrem von dem Maschinenkörper 2 der Laserschneidmaschine 1 abliegenden vorderen Ende werden die Absaugleitungen 21 durch ein Stirnblech 25 (Figuren 2, 4) des kastenartigen Unterbaus 11 der Werkstückauflage 8 verschlossen. An dem gegenüberliegenden rückwärtigen Längsende sind die Absaugleitungen 21 jeweils über ein Verbindungsstück 26 an die Sammelleitung 18 der Absaugvorrichtung 14 angeschlossen (Figur 4). Jedes der Verbindungsstücke 26 weist als Sperrvorrichtungseinheit einer Sperrvorrichtung 27 eine Klappe 28 auf. Für jede der Klappen 28 ist ein separater, nicht gezeigter Antriebsmotor vorgesehen, mittels dessen die betreffende Klappe 28 um eine horizontale Schwenkachse 29 wahlweise in eine vertikale oder in eine horizontale Stellung geschwenkt werden kann. Die Klappen 28 befinden sich bei vertikaler Ausrichtung in einem Sperrzustand, bei horizontaler Ausrichtung in einem Offenzustand.

Die Antriebsmotoren der Klappen 28 sind unabhängig voneinander betätigbar. Zur Steuerung der Antriebsmotoren der Klappen 28 ist eine numerische Steuerungseinheit vorgesehen, die in eine übergeordnete numerische Maschinensteuerung 30 der Laserschneidmaschine 1 integriert ist. Die numerische Maschinensteuerung 30 ist in Figur 1 stark schematisch dargestellt.

Die in Figur 3 ansatzweise erkennbaren Böden 24 der Absaugleitungen 21 sind über ihre gesamte Länge mit Absaugöffnungen 31 versehen. Ist die einer Absaugleitung 21 zugeordnete Klappe 28 der Sperrvorrichtung 27 in die Offenstellung geschwenkt und ist die Vakuumpumpe 15 der Absaugvorrichtung 14 eingeschaltet, so liegt der von der Vakuumpumpe 15 erzeugte Unterdruck über den Entstauber 16, die Sammelleitung 18 und das betreffende Verbindungstück 26 an dem Innern der Absaugleitung 21 an. Unter der Wirkung des an der Absaugleitung 21 anliegenden Unterdrucks werden an der Werkstückseite 12 des Auflagerostes 9 bearbeitungsbedingt anfallende Gase und feine Feststoffpartikel in dem der Absaugleitung 21 zugeordneten Flächenbereich des Auflagerostes abgesaugt.

Durch den Unterdruck im Innern der Absaugleitung 21 wird ein mit den an der Werkstückseite 12 des Auflagerostes 9 anfallenden Emissionen befrachteter und von der Werkstückseite 12 zu der Unterseite des Auflagerostes 9 gerichteter Abluftstrom erzeugt. An der Unterseite des Auflagerostes 9 wird der Abluftstrom durch die Absaugöffnungen 31 der Absaugleitung 21 in das Innere der Absaugleitung 21 abgesaugt. Von dort gelangt der Abluftstrom über das Verbindungsstück 26 und die Sammelleitung 18 in den Entstauber 16 der Absaugvorrichtung 14.

Der Boden 24 der Absaugleitungen 21 bietet eine Möglichkeit, die an der Unterseite des Auflagerostes 9 der Werkstückauflage 8 verfügbare und von der Vakuumpumpe 15 erzeugte Absaugleistung sowohl hinsichtlich ihres Umfangs als auch hinsichtlich des Ortes ihrer Verfügbarkeit zu variieren. Zu diesem Zweck ist der Boden 24 der Absaugleitung 21 mit dem an der Werkstückauflage 8 dauerhaft angebrachten Wandteil 23 der Leitungswand 22 lösbar verbunden. In dem gezeigten Beispielsfall ist der Boden 24 der Absaugleitung 21 in eine an dem Wandteil 23 der Leitungswand 22 vorgesehene Führung 32 eingeschoben. Bei Bedarf lässt sich der Boden 24 folglich entfernen, ohne dass zu diesem Zweck Befestigungsmittel gelöst werden müssten. In Figur 3 weisen die baugleichen Absaugleitungen 21 identisch ausgeführte Böden 24 auf.

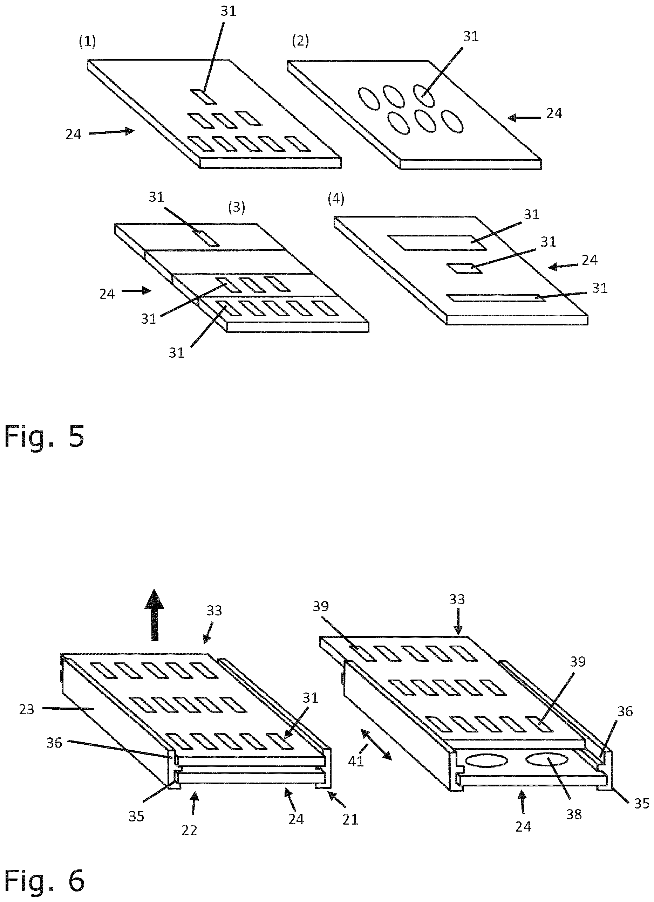

Insgesamt vier Bauarten des Bodens 24, die in dem dargestellten Beispielsfall als Alternativen zu dem in Figur 3 montierten Boden 24 zum Einbau an der Werkstückauflage 8 zur Auswahl stehen, sind in Figur 5 dargestellt.

Die Böden 24 gemäß Figur 5 unterscheiden sich voneinander hinsichtlich der Geometrie der Absaugöffnungen 31, hinsichtlich der Öffnungsweite des Strömungsquerschnitts der Absaugöffnungen 31 sowie hinsichtlich der Position der Absaugöffnungen 31 an dem jeweiligen Boden 24 und damit verbunden hinsichtlich der Position, welche die Absaugöffnungen 31 nach dem Verbinden des jeweiligen Bodens 24 mit dem Wandteil 23 der Leitungswand 22 an der Absaugleitung 21 einnehmen.

Darüber hinaus ist der in der Teildarstellung (3) von Figur 5 gezeigte Boden 24 segmentiert, während die Böden 24 der Teildarstellungen (1), (2) und (4) von Figur 5 einstückig ausgebildet sind. Die Segmentierung des Bodens 24 gemäß Teildarstellung (3) von Figur 5 bietet die Möglichkeit, zur Anpassung an den konkreten Bearbeitungsfall die einzelnen Segmente des Bodens 24 in unterschiedlicher Reihenfolge miteinander zu kombinieren und dadurch auf die Verteilung der Absaugleistung über den Boden 24 der Absaugleitung 21 Einfluss zu nehmen.

Der Betrag der an der Unterseite des Auflagerostes 9 bereitgestellten Absaugleistung ist über das Flächenverhältnis zwischen dem geschlossenen Bereich des eingebauten Bodens 24 und der Summe der Öffnungsweiten der Strömungsquerschnitte der Absaugöffnungen 31 des eingebauten Bodens 24 einstellbar. Der Ort, an welchem die Absaugleistung an den Absaugleitungen 21 verfügbar ist, lässt sich über die Position der Absaugöffnungen 31 an den Absaugleitungen 21 variieren.

Durch zweckmäßige Auswahl des an dem Wandteil 23 der Leitungswand 22 montierten Bodens 24 kann insbesondere sichergestellt werden, dass eine hinreichend große Absaugleistung an den Absaugleitungen 21 unterhalb desjenigen Bereichs des Auflagerostes 9 der Werkstückauflage 8 verfügbar ist, in welchem der Laserschneidkopf 5 ein auf dem Auflagerost 9 abgelegtes Blech bearbeitet. Dabei kann dafür gesorgt werden, dass die Absaugleistung in dem erforderlichen Umfang an einer Stelle der Absaugleitung 21 zur Verfügung steht, die im Sinne einer optimalen Absaugung von bearbeitungsbedingten Emissionen besonders günstig zu der Bearbeitungsstelle des Laser-Schneidstrahls an dem bearbeiteten Werkstück liegt.

Eine Grundeinstellung der Absaugverhältnisse an der Werkstückauflage 8 erlaubt die Sperrvorrichtung 27. Nachdem die beiden Klappen 28 der Sperrvorrichtung 27 unabhängig voneinander betätigt werden können, besteht die Möglichkeit, die Absaugleistung von vornherein entweder in beiden Absaugräumen 19 oder nur in einem der beiden Absaugräume 19 bereitzustellen. Bedarfsabhängig können entweder beide Klappen 28 in die Offenstellung überführt oder eine der Klappen 28 in die Offenstellung und die andere Klappe 28 in die Geschlossenstellung geschwenkt werden. Bei Offenstellung einer Klappe 28 ist die zugeordnete Absaugleitung 21 auf die Vakuumpumpe 15 der Absaugvorrichtung 14 aufgeschaltet. Ist eine Klappe 28 geschlossen, so ist die zugeordnete Absaugleitung 21 von der Vakuumpumpe 15 der Absaugvorrichtung 14 getrennt.

Der unter den in Figur 5 gezeigten Böden 24 ausgewählte Boden 24 wird vor Beginn eines Bearbeitungsprozesses in die Führung 32 an dem Wandteil 23 der Leitungswand 22 eingeschoben und verbleibt dort bis zum Abschluss oder bis zu einer Unterbrechung des Bearbeitungsprozesses. Erst dann können die Absaugverhältnisse durch Austauschen des in die Führung 32 eingeschobenen Bodens 24 gegen einen anderen der zur Auswahl stehenden Böden 24 verändert werden.

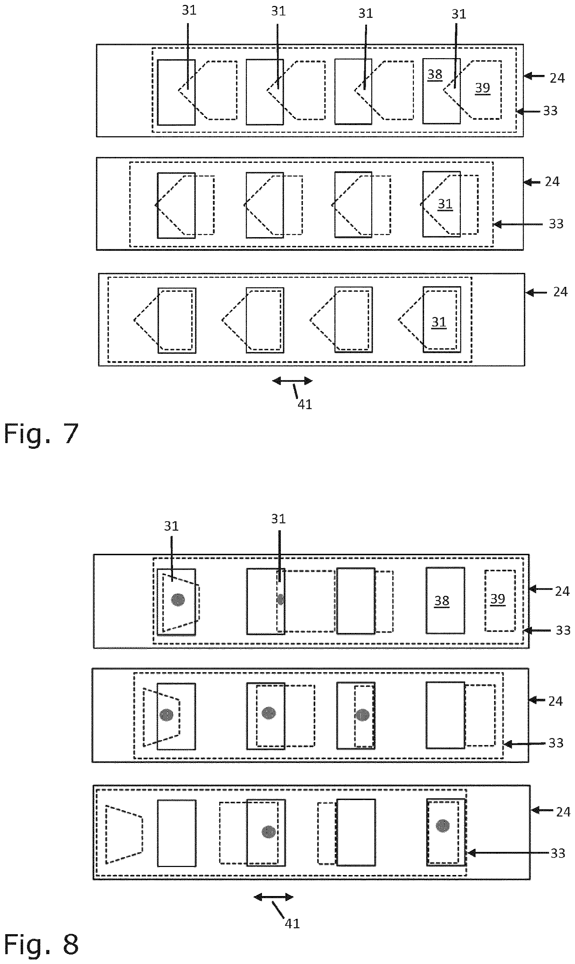

Die Figuren 6 bis 9 zeigen Anordnungen, mittels derer die Absaugverhältnisse nicht nur außerhalb sondern auch während eines laufenden Bearbeitungsprozesses bezüglich der an den Absaugleitungen 21 verfügbaren Absaugleistung und/oder bezüglich des Ortes der Verfügbarkeit der Absaugleistung modifiziert werden können.

Ausweislich der Figuren 6 bis 8 ist ein einen Teil der Leitungswand 22 ausbildender Boden 24 der betreffenden Absaugleitung 21 mit einem Stellelement 33 kombiniert, welches dem Boden 24 in der in Figur 6 durch einen Pfeil veranschaulichten Strömungsrichtung des mittels der Vakuumpumpe 15 erzeugten Abluftstroms benachbart ist.

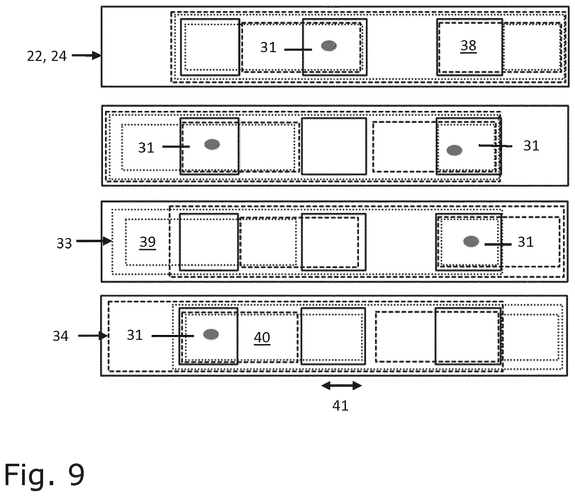

In Figur 9 ist der einen Teil der Leitungswand 22 ausbildende Boden 24 einer Absaugleitung 21 mit einem ersten Stellelement 33 und einem weiteren Stellelement 34 kombiniert. Die Konturen an dem Boden 24 sind mit ausgezogenen Linien, die Konturen an dem Stellelement 33 punktiert und die Konturen an dem weiteren Stellelement 34 gestrichelt dargestellt.

Der Boden 24 und die beiden Stellelemente 33, 34 sind in der Strömungsrichtung des mittels der Vakuumpumpe 15 erzeugten Abluftstroms einander benachbart. Der Boden 24 und das Stellelement 33 der Figuren 6 bis 8 sind in Führungen 35, 36 an dem Wandteil 23 der Leitungswand 22 eingeschoben. Im Falle der Anordnung gemäß Figur 9 ist an dem Wandteil 23 der Leitungswand 22 eine zusätzliche Führung für das weitere Stellelement 34 vorgesehen.

Gemäß den Figuren 6 bis 9 sind der Boden 24 mit Durchlassöffnungen 38 und die Stellelemente 33, 34 mit Durchlassöffnungen 39, 40 versehen. Die Durchlassöffnungen 38, 39, 40 weisen senkrecht zu der Strömungsrichtung des mittels der Absaugvorrichtung 14 erzeugten Abluftstroms eine gegenseitige Überdeckung auf. Der Strömungsquerschnitt der Absaugöffnungen 31 wird ausgebildet als resultierender Strömungsquerschnitt der Durchlassöffnungen 38, 39 beziehungsweise der Durchlassöffnungen 38, 39, 40. Die Geometrie des Strömungsquerschnitts der Durchlassöffnungen 38 an dem Boden 24 unterscheidet sich von der Geometrie des Strömungsquerschnitts der Durchlassöffnungen 39, 40 an den Stellelementen 33, 34. Voneinander verschieden sind außerdem die Geometrien der Durchlassöffnungen 39 an dem Stellelement 33 einerseits und der Durchlassöffnungen 40 an dem Stellelement 34 andererseits.

Wie aus den Figuren 6 bis 9 hervorgeht, kann die Öffnungsweite und zum Teil auch die Position der Absaugöffnungen 31 durch Veränderung der Position beeinflusst werden, in welcher sich der Boden 24 der Absaugleitung 21, das Stellelemente 33 und gegebenenfalls das Stellelement 34 relativ zueinander befinden. Diese Position kann verändert werden, indem die Stellelemente 33, 34 relativ zu dem Boden 24 und/oder relativ zueinander in einer in den Figuren 6 bis 9 durch einen Doppelpfeil 41 veranschaulichten Zustellrichtung verlagert werden.

Die gegenseitige Zustellung des Bodens 24 und der Stellelemente 33, 34 kann an jeder der Absaugleitungen 21 mittels eines separaten numerisch gesteuerten Stellmotors (nicht gezeigt) vorgenommen werden. Die Steuerung der Stellmotoren für den Boden 24 und die Stellelemente 33, 34 der Absaugleitungen 21 wird koordiniert mit der Steuerung des an der Werkstückseite des Auflagerostes 9 durchgeführten Bearbeitungsprozesses. Eine Steuerungseinheit für die Stellmotoren ist in die übergeordnete Maschinensteuerung 30 integriert.

## Patentansprüche

1. Werkstückauflage einer Bearbeitungsmaschine zum Bearbeiten von Werkstücken,
• mit einem flächigen Werkstück-Lagerungselement (9), das eine Werkstückseite (12) zur Lagerung eines Werkstücks während der Werkstückbearbeitung sowie eine von der Werkstückseite (12) abliegende Unterseite aufweist und das von der Werkstückseite (12) zu der Unterseite hin für einen mit bearbeitungsbedingten Emissionen befrachteten Abluftstrom durchlässig ist sowie
• mit einer Absaugvorrichtung (14), die einen Unterdruckerzeuger (15) und eine Absaugleitung (21) umfasst, wobei mittels des Unterdruckerzeugers (15) der von der Werkstückseite (12) zu der Unterseite des Werkstück-Lagerungselements (9) gerichtete Abluftstrom erzeugbar, mit einer Strömungsrichtung in die Absaugleitung (21) absaugbar und anschließend über die Absaugleitung (21) abführbar ist und wobei die Absaugleitung (21) eine stromabwärts der Werkstückseite (12) des Werkstück-Lagerungselements (9) angeordnete lagerungselementseitige Absaugöffnung (31) mit einem Strömungsquerschnitt mit einer Öffnungsweite aufweist und der Strömungsquerschnitt der Absaugöffnung (31) der Absaugleitung (21) aufgrund der Öffnungsweite von dem Abluftstrom in der Strömungsrichtung passierbar ist,
**dadurch gekennzeichnet, dass**
die Öffnungsweite des Strömungsquerschnitts der Absaugleitung (21) und/oder die Position der Absaugöffnung (31) an der Absaugleitung (21) variabel einstellbar ist.

2. Werkstückauflage nach Anspruch 1, **dadurch gekennzeichnet**
• **dass** die Absaugleitung (21) eine mehrteilige Leitungswand (22) mit mehreren Wandteilen aufweist, wobei einer der Wandteile als lösbares Wandelement (24) ausgebildet und mit einem an der Werkstückauflage dauerhaft angebrachten Wandteil (23) der Leitungswand (22) der Absaugleitung (21) lösbar verbunden ist,
• **dass** mehrere lösbare Wandelemente (24) zur Auswahl stehen und jeweils eine Absaugöffnung (31) mit einem Strömungsquerschnitt mit einer Öffnungsweite aufweisen, wobei die Öffnungsweiten der Strömungsquerschnitte der Absaugöffnungen (31) an den zur Auswahl stehenden lösbaren Wandelementen (24) unterschiedlich bemessen sind und/oder wobei die Absaugöffnung (31) der zur Auswahl stehenden lösbaren Wandelemente (24) bei lösbarer Verbindung der Wandelemente (24) mit dem an der Werkstückauflage dauerhaft angebrachten Wandteil (23) der Leitungswand (22) an der Leitungswand (22) unterschiedlich positioniert ist und
• **dass** die Öffnungsweite des Strömungsquerschnitts der Absaugöffnung (31) der Absaugleitung (21) und/oder die Position der Absaugöffnung (31) an der Absaugleitung (21) variabel einstellbar ist, indem wahlweise eines der zur Auswahl stehenden lösbaren Wandelemente (24) mit dem an der Werkstückauflage dauerhaft angebrachten Wandteil (23) der Leitungswand (22) der Absaugleitung (21) lösbar verbindbar ist.

3. Werkstückauflage nach einem der vorhergehenden Ansprüche, **dadurch gekennzeichnet,**
• **dass** die Absaugöffnung (31) der Absaugleitung (21) von zwei Durchlassöffnungen (38, 39) gebildet ist, die jeweils einen Strömungsquerschnitt aufweisen, wobei von den Durchlassöffnungen (38, 39) eine erste Durchlassöffnung (38) an einer Leitungswand (22) der Absaugleitung (21) und eine zweite Durchlassöffnung (39) an einem der Leitungswand (22) der Absaugleitung (21) in der Strömungsrichtung des Abluftstroms benachbarten Stellelement (33) vorgesehen ist, wobei die an der Leitungswand (22) der Absaugleitung (21) und an dem Stellelement (33) vorgesehenen Durchlassöffnungen (38, 39) in einer Querrichtung der Strömungsrichtung des Abluftstroms eine gegenseitige Überdeckung aufweisen und von dem Abluftstrom in der Strömungsrichtung passierbar sind,
• **dass** der Strömungsquerschnitt der Absaugöffnung (31) der Absaugleitung (21) als resultierender Strömungsquerschnitt der Strömungsquerschnitte der beiden Durchlassöffnungen (38, 39) gebildet ist und
• **dass** die Öffnungsweite des resultierenden Strömungsquerschnitts der Absaugöffnung (31) der Absaugleitung (21) variabel einstellbar ist, indem die Leitungswand (22) der Absaugleitung (21) und das Stellelement (33) in einer in der Querrichtung der Strömungsrichtung des Abluftstroms verlaufenden Zustellrichtung (41) relativ zueinander zustellbar sind und dadurch die in der Querrichtung der Strömungsrichtung des Abluftstroms bestehende gegenseitige Überdeckung der beiden Durchlassöffnungen (38, 39) variierbar ist.

4. Werkstückauflage nach Anspruch 3, **dadurch gekennzeichnet,**
• **dass** das Stellelement (33) als erstes Stellelement (33) vorgesehen ist und dass zusätzlich zu dem ersten Stellelement (33) wenigstens ein weiteres Stellelement (34) vorgesehen ist, welches in der Strömungsrichtung des Abluftstroms der Leitungswand (22) der Absaugleitung (21) oder dem ersten Stellelement (33) benachbart ist und welches eine weitere Durchlassöffnung (40) aufweist, wobei die an der Leitungswand (22) der Absaugleitung (21) und an den Stellelementen (33, 34) vorgesehenen Durchlassöffnungen (38, 39, 40) in der Querrichtung der Strömungsrichtung des Abluftstroms eine gegenseitige Überdeckung aufweisen und von dem Abluftstrom in der Strömungsrichtung passierbar sind,
• **dass** die Absaugöffnung (31) der Absaugleitung (21) von den an der Leitungswand (22) der Absaugleitung (21) und an den Stellelementen (33, 34) vorgesehenen Durchlassöffnungen (38, 39, 40) gebildet ist,
• **dass** der Strömungsquerschnitt der Absaugöffnung (31) der Absaugleitung (21) als resultierender Strömungsquerschnitt der Strömungsquerschnitte der an der Leitungswand (22) der Absaugleitung (21) und an den Stellelementen (33, 34) vorgesehenen Durchlassöffnungen (38, 39, 40) gebildet ist und
• **dass** die Öffnungsweite des resultierenden Strömungsquerschnitts der Absaugöffnung (31) der Absaugleitung (21) variabel einstellbar ist, indem die Leitungswand (22) der Absaugleitung (21) und das erste Stellelement (33) sowie das weitere Stellelement (34) in der Zustellrichtung (41) relativ zueinander zustellbar sind und dadurch die in der Querrichtung der Strömungsrichtung des Abluftstroms bestehende gegenseitige Überdeckung der an der Leitungswand (22) der Absaugleitung (21) und an den Stellelementen (33, 34) vorgesehenen Durchlassöffnungen (38, 39, 40) variierbar ist.

5. Werkstückauflage nach einem der vorhergehenden Ansprüche, **dadurch gekennzeichnet,**
• **dass** die Absaugleitung (21) die stromabwärts der Werkstückseite (12) des Werkstück-Lagerungselements (9) angeordnete lagerungselementseitige Absaugöffnung (31) als erste Absaugöffnung (31) und zusätzlich zu der ersten Absaugöffnung (31) wenigstens eine zweite stromabwärts der Werkstückseite (12) des Werkstück-Lagerungselements (9) angeordnete lagerungselementseitige Absaugöffnung (31) aufweist,
• **dass** die zweite Absaugöffnung (31) einen Strömungsquerschnitt mit einer Öffnungsweite aufweist und der Strömungsquerschnitt der zweiten Absaugöffnung (31) der Absaugleitung (21) aufgrund der Öffnungsweite von dem Abluftstrom in der Strömungsrichtung passierbar ist und
• **dass** die Öffnungsweite des Strömungsquerschnitts der zweiten Absaugöffnung (31) der Absaugleitung (21) und/oder die Position der zweiten Absaugöffnung (31) an der Absaugleitung (21) variabel einstellbar ist.

6. Werkstückauflage nach Anspruch 5 und Anspruch 2, **dadurch gekennzeichnet,**
• **dass** die zur Auswahl stehenden lösbaren Wandelemente (24) jeweils eine erste Absaugöffnung (31) und wenigstens eine zweite Absaugöffnung (31) aufweisen, wobei die Öffnungsweiten der Strömungsquerschnitte der ersten Absaugöffnung (31) und der zweiten Absaugöffnung (31) an den zur Auswahl stehenden lösbaren Wandelementen (24) unterschiedlich bemessen sind und/oder wobei von der ersten Absaugöffnung (31) und von der zweiten Absaugöffnung (31) der zur Auswahl stehenden lösbaren Wandelemente (24) wenigstens eine Absaugöffnung (31) bei lösbarer Verbindung der Wandelemente (24) mit dem an der Werkstückauflage dauerhaft angebrachten Wandteil (23) der Leitungswand (22) an der Leitungswand (22) unterschiedlich positioniert ist und
• **dass** die Öffnungsweiten der Strömungsquerschnitte der ersten Absaugöffnung (31) der Absaugleitung (21) und der zweiten Absaugöffnung (31) der Absaugleitung (21) und/oder die Position wenigstens einer der Absaugöffnungen (31) an der Absaugleitung (21) variabel einstellbar sind, indem wahlweise eines der zur Auswahl stehenden lösbaren Wandelemente (24) mit dem an der Werkstückauflage dauerhaft angebrachten Wandteil (23) der Leitungswand (22) der Absaugleitung (21) lösbar verbindbar ist.

7. Werkstückauflage nach Anspruch 5 und Anspruch 3, **dadurch gekennzeichnet,**
• **dass** die zweite Absaugöffnung (31) der Absaugleitung (21) von zwei zweiten Durchlassöffnungen (38, 39) gebildet ist, die jeweils einen Strömungsquerschnitt aufweisen, wobei von den zweiten Durchlassöffnungen (38, 39) die eine zweite Durchlassöffnung (38) an der Leitungswand (22) der Absaugleitung (21) und die andere zweite Durchlassöffnung (39) an dem der Leitungswand (22) der Absaugleitung (21) in der Strömungsrichtung des Abluftstroms benachbarten Stellelement (33) vorgesehen ist, wobei die an der Leitungswand (22) der Absaugleitung (21) und an dem Stellelement (33) vorgesehenen zweiten Durchlassöffnungen (38, 39) in der Querrichtung der Strömungsrichtung des Abluftstroms eine gegenseitige Überdeckung aufweisen und von dem Abluftstrom in der Strömungsrichtung passierbar sind,
• **dass** der Strömungsquerschnitt der zweiten Absaugöffnung (31) der Absaugleitung (21) als resultierender Strömungsquerschnitt der Strömungsquerschnitte der beiden zweiten Durchlassöffnungen (38, 39) gebildet ist und
• **dass** die Öffnungsweiten der resultierenden Strömungsquerschnitte der ersten Absaugöffnung (31) der Absaugleitung (21) und der zweiten Absaugöffnung (31) der Absaugleitung (21) variabel einstellbar sind, indem die Leitungswand (22) der Absaugleitung (21) und das Stellelement (33) in der Zustellrichtung (41) relativ zueinander zustellbar sind und dadurch die in der Querrichtung der Strömungsrichtung des Abluftstroms bestehende gegenseitige Überdeckung der Durchlassöffnungen (38, 39) und die in der Querrichtung der Strömungsrichtung des Abluftstroms bestehende gegenseitige Überdeckung der beiden zweiten Durchlassöffnungen (38, 39) variierbar sind.

8. Werkstückauflage nach Anspruch 7 und Anspruch 4, **dadurch gekennzeichnet,**
• **dass** das weitere Stellelement (34) eine zweite Durchlassöffnung (40) aufweist, wobei die an der Leitungswand (22) der Absaugleitung (21) und an den Stellelementen (33, 34) vorgesehenen zweiten Durchlassöffnungen (38, 39) in der Querrichtung der Strömungsrichtung des Abluftstroms eine gegenseitige Überdeckung aufweisen und
• **dass** die Öffnungsweiten der resultierenden Strömungsquerschnitte der ersten Absaugöffnung (31) der Absaugleitung (21) und der zweiten Absaugöffnung (31) der Absaugleitung (21) variabel einstellbar sind, indem die Leitungswand (22) der Absaugleitung (21) und das erste Stellelement (33) sowie das weitere Stellelement (34) in der Zustellrichtung (41) relativ zueinander zustellbar sind und dadurch die in der Querrichtung der Strömungsrichtung des Abluftstroms bestehende gegenseitige Überdeckung der an der Leitungswand (22) der Absaugleitung (21) und an den Stellelementen (33, 34) vorgesehenen Durchlassöffnungen (38, 39, 40) und der an der Leitungswand (22) der Absaugleitung (21) und an den Stellelementen (33, 34) vorgesehenen zweiten Durchlassöffnungen (38, 39, 40) variierbar ist.

9. Werkstückauflage nach einem der Ansprüche 3, 4, 7, 8, **dadurch gekennzeichnet, dass** die an der Leitungswand (22) der Absaugleitung (21) vorgesehene(n) Durchlassöffnung(en) (38) einerseits und die an dem oder an wenigstens einem der Stellelemente (33, 34) vorgesehene(n) Durchlassöffnung(en) (39, 40) andererseits und/oder dass die an einem der Stellelemente (33. 34) vorgesehene(n) Durchlassöffnung(en) (39, 40) einerseits und die an dem anderen der Stellelemente (33, 34) vorgesehene(n) Durchlassöffnung(en) (39, 40) andererseits unterschiedliche Querschnittsgeometrien aufweisen.

10. Werkstückauflage nach Anspruch 5 und einem der Ansprüche 6 bis 9, **dadurch gekennzeichnet dass** die Absaugleitung (21) mit einer in der Strömungsrichtung der Abluftströmung veränderlichen Öffnungsdichte mit Absaugöffnungen (31) belegt ist.

11. Werkstückauflage nach einem der vorhergehenden Ansprüche, **dadurch gekennzeichnet,**
• **dass** die Absaugvorrichtung (14) die Absaugleitung (21) als erste Absaugleitung (21) und zusätzlich zu der ersten Absaugleitung (21) wenigstens eine weitere Absaugleitung (21) umfasst, wobei die erste Absaugleitung (21) und die weitere Absaugleitung (21) unterschiedlichen Flächenbereichen des Werkstück-Lagerungselements (9) zugeordnet sind und wobei über die erste Absaugleitung (21) und die weitere Absaugleitung (21) ein Abluftstrom von der Werkstückseite (12) des jeweils zugeordneten Flächenbereichs des Werkstück-Lagerungselements (9) abführbar ist und
• **dass** an wenigstens einer der Absaugleitungen (21) die Öffnungsweite des Strömungsquerschnitts der Absaugöffnung(en) (31) und/oder die Position der Absaugöffnung(en) (31) an der Absaugleitung (21) variabel einstellbar ist.

12. Werkstückauflage nach Anspruch 11, **dadurch gekennzeichnet,**
• **dass** für die erste Absaugleitung (21) und/oder für die weitere Absaugleitung (21) eine Sperrvorrichtung (27) vorgesehen ist, die gesteuert betätigbar und dadurch in einen Sperrzustand oder in einen Offenzustand überführbar ist und
• **dass** die erste Absaugleitung (21) und/oder die weitere Absaugleitung (21) bei Sperrzustand der Sperrvorrichtung (27) von dem Unterdruckerzeuger (15) der Absaugvorrichtung (14) getrennt und bei Offenzustand der Sperrvorrichtung (27) auf den Unterdruckerzeuger (15) der Absaugvorrichtung (14) aufgeschaltet ist beziehungsweise sind.

13. Werkstückauflage nach Anspruch 12, **dadurch gekennzeichnet, dass** die Sperrvorrichtung (27) eine der ersten Absaugleitung (21) zugeordnete erste Sperrvorrichtungseinheit (28) sowie eine der weiteren Absaugleitung (21) zugeordnete weitere Sperrvorrichtungseinheit (28) aufweist und dass die erste Sperrvorrichtungseinheit (28) und die weitere Sperrvorrichtungseinheit (28) unabhängig voneinander betätigbar und dadurch in einen Sperrzustand oder in einen Offenzustand überführbar sind.

14. Bearbeitungsmaschine zum vorzugsweise thermischen Bearbeiten von Werkstücken, mit einer Bearbeitungsvorrichtung (2, 3, 4, 5) sowie mit einer Werkstückauflage (8), mittels derer ein Werkstück während der Bearbeitung durch die Bearbeitungsvorrichtung (2, 3, 4, 5) lagerbar ist,
**dadurch gekennzeichnet, dass**
als Werkstückauflage eine Werkstückauflage (8) nach einem der vorhergehenden Ansprüche vorgesehen ist.

15. Bearbeitungsmaschine nach Anspruch 14, mit einer Werkstückauflage (8) nach Anspruch 13, wobei die Bearbeitungsvorrichtung (2, 3, 4, 5) zur Bearbeitung eines mittels des Werkstück-Lagerungselements (9) der Werkstückauflage (8) gelagerten Werkstücks eine Bearbeitungseinheit (5) aufweist, die parallel zu dem Werkstück-Lagerungselement (9) in eine Bearbeitungsposition zustellbar ist, **dadurch gekennzeichnet, dass** die erste Sperrvorrichtungseinheit (28) und die weitere Sperrvorrichtungseinheit (28) in Abhängigkeit von der Bearbeitungsposition der Bearbeitungseinheit (5) betätigbar sind.

## Claims

1. A workpiece support of a processing machine for processing workpieces,
• with a flat workpiece support element (9), which has a workpiece side (12) for supporting a workpiece during workpiece machining and an underside lying away from the workpiece side (12) and which is permeable from the workpiece side (12) to the underside for an exhaust air flow carrying machining-related emissions, and
• with a suction device (14) which comprises a vacuum generator (15) and a suction line (21), wherein the exhaust air flow directed from the workpiece side (12) to the underside of the workpiece support element (9) can be generated by means of the vacuum generator (15), with a flow direction into the suction line (21) and can then be discharged via the suction line (21), and wherein the suction line (21) has a suction opening (31) on the support element side arranged downstream of the workpiece side (12) of the workpiece support element (9) and having a flow cross-section with an opening width, and the flow cross-section of the suction opening (31) of the suction line (21) can be passed by the exhaust air flow in the flow direction due to the opening width,
**characterized in that**
the opening width of the flow cross-section of the suction line (21) and/or the position of the suction opening (31) on the suction line (21) can be adjusted variably.

2. The workpiece support according to claim 1, **characterized in that**
• the suction line (21) has a multi-part line wall (22) with a plurality of wall parts, one of the wall parts being designed as a detachable wall element (24) and being detachably connected to a wall part (23) of the line wall (22) of the suction line (21) which is permanently attached to the workpiece support,
• a plurality of detachable wall elements (24) are available for selection and each have a suction opening (31) with a flow cross-section with an opening width, wherein the opening widths of the flow cross-sections of the suction openings (31) on the detachable wall elements (24) available for selection are dimensioned differently and/or wherein the suction opening (31) of the detachable wall elements (24) available for selection is positioned differently on the line wall (22) when the wall elements (24) are detachably connected to the wall part (23) of the line wall (22) permanently attached to the workpiece support, and
• the opening width of the flow cross-section of the suction opening (31) of the suction line (21) and/or the position of the suction opening (31) on the suction line (21) can be adjusted variably, **in that** optionally one of the detachable wall elements (24) available for selection can be detachably connected to the wall part (23) of the line wall (22) of the suction line (21) permanently attached to the workpiece support.

3. The workpiece support according to one of the preceding claims, **characterized in that**
• the suction opening (31) of the suction line (21) is formed by two passage openings (38, 39) which each have a flow cross-section, a first passage opening (38) of the passage openings (38, 39) being provided on a line wall (22) of the suction line (21) and a second passage opening (39) being provided on a positioning element (33) adjacent to the line wall (22) of the suction line (21) in the flow direction of the exhaust air flow, wherein the passage openings (38, 39) provided on the line wall (22) of the suction line (21) and on the positioning element (33) have a mutual overlap in a transverse direction of the flow direction of the exhaust air flow and can be passed by the exhaust air flow in the flow direction,
• the flow cross-section of the suction opening (31) of the suction line (21) is formed as the resulting flow cross-section of the flow cross-sections of the two passage openings (38, 39), and
• the opening width of the resulting flow cross-section of the suction opening (31) of the suction line (21) is variably adjustable **in that** the line wall (22) of the suction line (21) and the positioning element (33) are adjustable relative to one another in a feed direction (41) extending in the transverse direction of the flow direction of the exhaust air flow, and the mutual overlap of the two passage openings (38, 39) existing in the transverse direction of the flow direction of the exhaust air flow can thereby be varied.

4. The workpiece support according to claim 3, **characterized in that**
• the positioning element (33) is provided as a first positioning element (33) and **in that**, in addition to the first positioning element (33), at least one further positioning element (34) is provided, which is adjacent to the line wall (22) of the suction line (21) or to the first positioning element (33) in the flow direction of the exhaust air flow and which has a further passage opening (40), wherein the passage openings (38, 39, 40) provided on the line wall (22) of the suction line (21) and on the positioning elements (33, 34) have a mutual overlap in the transverse direction of the flow direction of the exhaust air flow and can be passed by the exhaust air flow in the flow direction,
• the suction opening (31) of the suction line (21) is formed by the passage openings (38, 39, 40) provided on the line wall (22) of the suction line (21) and on the positioning elements (33, 34),
• the flow cross-section of the suction opening (31) of the suction line (21) is formed as the resulting flow cross-section of the flow cross-sections of the passage openings (38, 39, 40) provided on the line wall (22) of the suction line (21) and on the positioning elements (33, 34), and
• the opening width of the resulting flow cross-section of the suction opening (31) of the suction line (21) is variably adjustable, **in that** the line wall (22) of the suction line (21) and the first positioning element (33) as well as the further positioning element (34) can be adjusted relative to one another in the feed direction (41) and the mutual overlap of the passage openings (38, 39, 40) provided on the duct wall (22) of the suction line (21) and on the positioning elements (33, 34) in the transverse direction of the flow direction of the exhaust air flow can thereby be varied.

5. The workpiece support according to one of the preceding claims, **characterized in that**
• the suction line (21) has the suction opening (31) on the support element side arranged downstream of the workpiece side (12) of the workpiece support element (9) as the first suction opening (31) and, in addition to the first suction opening (31), at least one second suction opening (31) on the support element side arranged downstream of the workpiece side (12) of the workpiece support element (9),
• the second suction opening (31) has a flow cross-section with an opening width and the flow cross-section of the second suction opening (31) of the suction line (21) can be passed by the exhaust air flow in the flow direction due to the opening width, and
• the opening width of the flow cross-section of the second suction opening (31) of the suction line (21) and/or the position of the second suction opening (31) on the suction line (21) can be variably adjusted.

6. The workpiece support according to claim 5 and claim 2, **characterized in that**
• the detachable wall elements (24) available for selection each have a first suction opening (31) and at least one second suction opening (31), wherein the opening widths of the flow cross-sections of the first suction opening (31) and of the second suction opening (31) on the detachable wall elements (24) available for selection are dimensioned differently and/or wherein at least one suction opening (31) of the first suction opening (31) and of the second suction opening (31) of the detachable wall elements (24) available for selection is positioned differently on the line wall (22) when the wall elements (24) are detachably connected to the wall part (23) of the line wall (22) permanently attached to the workpiece support, and
• the opening widths of the flow cross-sections of the first suction opening (31) of the suction line (21) and of the second suction opening (31) of the suction line (21) and/or the position of at least one of the suction openings (31) on the suction line (21) can be variably adjusted, **in that** optionally one of the detachable wall elements (24) available for selection can be detachably connected to the wall part (23) of the line wall (22) of the suction line (21) which is permanently attached to the workpiece support.

7. The workpiece support according to claim 5 and claim 3, **characterized in that**
• the second suction opening (31) of the suction line (21) is formed by two second passage openings (38, 39) which each have a flow cross-section, one of the second passage openings (38) being provided on the line wall (22) of the suction line (21) and the other second passage opening (39) being provided on the positioning element (33) adjacent to the line wall (22) of the suction line (21) in the flow direction of the exhaust air flow, wherein the second passage openings (38, 39) provided on the line wall (22) of the suction line (21) and on the positioning element (33) have a mutual overlap in the transverse direction of the flow direction of the exhaust air flow and the passage openings (38, 39) can be passed by the exhaust air flow in the flow direction,
• the flow cross-section of the second suction opening (31) of the suction line (21) is formed as the resulting flow cross-section of the flow cross-sections of the two second passage openings (38, 39), and
• the opening widths of the resulting flow cross-sections of the first suction opening (31) of the suction line (21) and of the second suction opening (31) of the suction line (21) are variably adjustable, **in that** the line wall (22) of the suction line (21) and the positioning element (33) can be adjusted relative to one another in the feed direction (41) and the mutual overlap of the passage openings (38, 39) existing in the transverse direction of the flow direction of the exhaust air flow and the mutual overlap of the two second passage openings (38, 39) existing in the transverse direction of the flow direction of the exhaust air flow can thereby be varied.

8. The workpiece support according to claim 7 and claim 4, **characterized in that**
• the further positioning element (34) has a second passage opening (40), the second passage openings (38, 39) provided on the line wall (22) of the suction line (21) and on the positioning elements (33, 34) having a mutual overlap in the transverse direction of the flow direction of the exhaust air flow, and
• the opening widths of the resulting flow cross-sections of the first suction opening (31) of the suction line (21) and the second suction opening (31) of the suction line (21) are variably adjustable, **in that** the line wall (22) of the suction line (21) and the first positioning element (33) and the further positioning element (34) can be adjusted relative to one another in the feed direction (41) and the mutual overlap of the passage openings (38, 39, 40) provided on the line wall (22) of the suction line (21) and on the positioning elements (33, 34) and of the second passage openings (38, 39, 40) provided on the line wall (22) of the suction line (21) and on the positioning elements (33, 34), which overlap exists in the transverse direction of the flow direction of the exhaust air flow, can thereby be varied.

9. The workpiece support according to one of claims 3, 4, 7, 8, **characterized in that** the passage opening(s) (38) provided on the line wall (22) of the suction line (21) on the one hand and the passage opening(s) (39, 40) provided on the positioning elements (33, 34) or on at least one of them on the other hand, and/or that the passage opening(s) (39, 40) provided on one of the positioning elements (33, 34) on the one hand and the passage opening(s) (39, 40) provided on the other of the positioning elements (33, 34) on the other hand have different cross-sectional geometries.

10. The workpiece support according to claim 5 and one of claims 6 to 9, **characterized in that** the suction line (21) is provided with suction openings (31) with a variable opening density in the flow direction of the exhaust air flow.

11. The workpiece support according to one of the preceding claims, **characterized in that**
• the suction device (14) comprises the suction line (21) as a first suction line (21) and, in addition to the first suction line (21), at least one further suction line (21), the first suction line (21) and the further suction line (21) being assigned to different surface areas of the workpiece support element (9), and it being possible to discharge an exhaust air flow from the workpiece side (12) of the respectively assigned surface area of the workpiece support element (9) via the first suction line (21) and the further suction line (21), and
• the opening width of the flow cross-section of the suction opening(s) (31) and/or the position of the suction opening(s) (31) on the suction line (21) can be variably adjusted on at least one of the suction lines (21).

12. The workpiece support according to claim 11, **characterized in that**
• a locking device (27) is provided for the first suction line (21) and/or for the further suction line (21), which locking device can be actuated in a controlled manner and can thus be converted into a locked state or into an unlocked state, and
• the first suction line (21) and/or the further suction line (21) is/are disconnected from the vacuum generator (15) of the suction device (14) when the locking device (27) is in the locked state and is/are connected to the vacuum generator (15) of the suction device (14) when the locking device (27) is in the unlocked state.

13. The workpiece support according to claim 12, **characterized in that** the locking device (27) has a first locking device unit (28) assigned to the first suction line (21) and a further locking device unit (28) assigned to the further suction line (21), and **in that** the first locking device unit (28) and the further locking device unit (28) can be actuated independently of one another and can thus be converted into a locked state or into an unlocked state.

14. A processing machine for the preferably thermal processing of workpieces, with a processing device (2, 3, 4, 5) and with a workpiece support (8), by means of which a workpiece can be stored during processing by the processing device (2, 3, 4, 5),
**characterized in that**
a workpiece support (8) according to one of the preceding claims is provided as the workpiece support.

15. The processing machine according to claim 14, with a workpiece support (8) according to claim 13, wherein the processing device (2, 3, 4, 5) has a processing unit (5) for processing a workpiece supported by means of the workpiece support element (9) of the workpiece support (8), which processing unit can be fed into a processing position parallel to the workpiece support element (9), **characterized in that** the first locking device unit (28) and the further locking device unit (28) can be actuated as a function of the processing position of the processing unit (5).

## Revendications

1. Support de pièce d'une machine d'usinage pour l'usinage de pièces,
• doté d'un élément plat de support (9) de pièce qui présente un côté pièce (12) pour le support d'une pièce pendant l'usinage de la pièce ainsi qu'un côté inférieur éloigné du côté pièce (12) et qui est perméable, depuis le côté pièce (12) vers le côté inférieur, à un flux d'air d'évacuation chargé d'émissions dues à l'usinage, et
• doté d'un dispositif d'aspiration (14) comprenant un générateur de dépression (15) et une conduite d'aspiration (21) où, au moyen du générateur de dépression (15), le flux d'air d'évacuation dirigé depuis le côté pièce (12) vers le côté inférieur de l'élément de support (9) de pièce peut être généré, peut être aspiré dans la conduite d'aspiration (21) selon une direction d'écoulement et peut ensuite être évacué via la conduite d'aspiration (21), et où la conduite d'aspiration (21) présente une ouverture d'aspiration (31) côté élément de support, disposée en aval du côté pièce (12) de l'élément de support (9) de pièce, dotée d'une section transversale d'écoulement avec une largeur d'ouverture, et où la section transversale d'écoulement de l'ouverture d'aspiration (31) de la conduite d'aspiration (21) peut être traversée par le flux d'air d'évacuation dans la direction d'écoulement en fonction de la largeur d'ouverture,
**caractérisé en ce que**
la largeur d'ouverture de la section transversale d'écoulement de la conduite d'aspiration (21) et/ou la position de l'ouverture d'aspiration (31) sur la conduite d'aspiration (21) sont à réglage variable.

2. Support de pièce selon la revendication 1 **caractérisé en ce que**
• la conduite d'aspiration (21) présente une paroi de conduite (22) en plusieurs parties dotées de plusieurs parties de paroi, où l'une des parties de paroi est réalisée sous forme d'élément de paroi (24) amovible et est reliée de manière amovible à une partie de paroi (23) de la paroi de conduite (22) de la conduite d'aspiration (21) montée de manière fixe sur le support de pièce,
• plusieurs éléments de paroi (24) amovibles sont disponibles au choix et présentent chacun une ouverture d'aspiration (31) dotée d'une section transversale d'écoulement avec une largeur d'ouverture, où les largeurs d'ouverture des sections transversales d'écoulement des ouvertures d'aspiration (31) sont dimensionnées différemment sur les éléments de paroi (24) amovibles disponibles au choix, et/ou où l'ouverture d'aspiration (31) des éléments de paroi (24) amovibles disponibles au choix est positionnée différemment sur la paroi de conduite (22) en cas de liaison amovible des éléments de paroi (24) avec la partie de paroi (23) de la paroi de conduite (22) montée de manière fixe sur le support de pièce, et
• la largeur d'ouverture de la section transversale d'écoulement de l'ouverture d'aspiration (31) de la conduite d'aspiration (21) et/ou la position de l'ouverture d'aspiration (31) sur la conduite d'aspiration (21) sont à réglage variable, l'un des éléments de paroi (24) amovible disponible au choix pouvant sélectivement être relié de manière amovible à la partie de paroi (23) de la paroi de conduite (22) de la conduite d'aspiration (21), montée de manière fixe sur le support de pièce.

3. Support de pièce selon l'une des revendications précédentes, **caractérisé en ce que**
• l'ouverture d'aspiration (31) de la conduite d'aspiration (21) est formée par deux ouvertures de passage (38, 39) présentant chacune une section transversale d'écoulement, où, parmi les ouvertures de passage (38, 39), une première ouverture de passage (38) est prévue sur une paroi de conduite (22) de la conduite d'aspiration (21) et une deuxième ouverture de passage (39) est prévue sur un élément de réglage (33) voisin de la paroi de conduite (22) de la conduite d'aspiration (21) dans la direction d'écoulement du flux d'air d'évacuation, où les ouvertures de passage (38, 39) prévues sur la paroi de conduite (22) de la conduite d'aspiration (21) et sur l'élément de réglage (33) présentent un recouvrement mutuel dans une direction transversale de la direction d'écoulement du flux d'air d'évacuation et peuvent être traversées par le flux d'air d'évacuation dans la direction d'écoulement,
• la section transversale d'écoulement de l'ouverture d'aspiration (31) de la conduite d'aspiration (21) est formée en tant que section transversale d'écoulement résultante des sections transversales d'écoulement des deux ouvertures de passage (38, 39), et
• la largeur d'ouverture de la section transversale d'écoulement résultante de l'ouverture d'aspiration (31) de la conduite d'aspiration (21) est à réglage variable, la paroi de conduite (22) de la conduite d'aspiration (21) et l'élément de réglage (33) pouvant être avancés l'un par rapport à l'autre dans une direction d'avance (41) s'étendant dans la direction transversale de la direction d'écoulement du flux d'air d'évacuation, et le recouvrement mutuel des deux ouvertures de passage (38, 39) existant dans la direction transversale de la direction d'écoulement du flux d'air d'évacuation pouvant ainsi être modifié.

4. Support de pièce selon la revendication 3 **caractérisé en ce que**
• l'élément de réglage (33) est prévu comme premier élément de réglage (33) et **en ce que**, en plus du premier élément de réglage (33), il est prévu au moins un autre élément de réglage (34) qui est voisin de la paroi de conduite (22) de la conduite d'aspiration (21) ou du premier élément de réglage (33) dans la direction d'écoulement du flux d'air d'évacuation et qui présente une autre ouverture de passage (40), où les ouvertures de passage (38, 39, 40) prévues sur la paroi de conduite (22) de la conduite d'aspiration (21) et sur les éléments de réglage (33, 34) présentent un recouvrement mutuel dans la direction transversale de la direction d'écoulement du flux d'air d'évacuation et peuvent être traversées par le flux d'air d'évacuation dans la direction d'écoulement,
• l'ouverture d'aspiration (31) de la conduite d'aspiration (21) est formée par les ouvertures de passage (38, 39, 40) prévues sur la paroi de conduite (22) de la conduite d'aspiration (21) et sur les éléments de réglage (33, 34),
• la section transversale d'écoulement de l'ouverture d'aspiration (31) de la conduite d'aspiration (21) est formée en tant que section transversale d'écoulement résultante des sections transversales d'écoulement des ouvertures de passage (38, 39, 40) prévues sur la paroi de conduite (22) de la conduite d'aspiration (21) et sur les éléments de réglage (33, 34), et
• la largeur d'ouverture de la section transversale d'écoulement résultante de l'ouverture d'aspiration (31) de la conduite d'aspiration (21) est à réglage variable, la paroi de conduite (22) de la conduite d'aspiration (21) et le premier élément de réglage (33) ainsi que l'autre élément de réglage (34) pouvant être avancés l'un par rapport à l'autre dans la direction d'avance (41) et le recouvrement mutuel, existant dans la direction transversale de la direction d'écoulement du flux d'air d'évacuation, des ouvertures de passage (38, 39, 40) prévues sur la paroi de conduite (22) de la conduite d'aspiration (21) et sur les éléments de réglage (33, 34) pouvant ainsi être modifié.

5. Support de pièce selon l'une des revendications précédentes, **caractérisé en ce que**
• la conduite d'aspiration (21) présente l'ouverture d'aspiration (31) côté élément de support, disposée en aval du côté pièce (12) de l'élément de support (9) de pièce, comme première ouverture d'aspiration (31) et, en plus de la première ouverture d'aspiration (31), au moins une deuxième ouverture d'aspiration (31) côté élément de support, disposée en aval du côté pièce (12) de l'élément de support (9) de pièce,
• la deuxième ouverture d'aspiration (31) présente une section transversale d'écoulement avec une largeur d'ouverture, et **en ce que** la section transversale d'écoulement de la deuxième ouverture d'aspiration (31) de la conduite d'aspiration (21) peut être traversée par le flux d'air d'évacuation dans le sens d'écoulement en fonction de la largeur d'ouverture, et
• la largeur d'ouverture de la section transversale d'écoulement de la deuxième ouverture d'aspiration (31) de la conduite d'aspiration (21) et/ou la position de la deuxième ouverture d'aspiration (31) sur la conduite d'aspiration (21) sont à réglage variable.

6. Support de pièce selon la revendication 5 et la revendication 2 **caractérisé en ce que**
• les éléments de paroi (24) amovibles disponibles au choix présentent chacun une première ouverture d'aspiration (31) et au moins une deuxième ouverture d'aspiration (31), où les largeurs d'ouverture des sections transversales d'écoulement de la première ouverture d'aspiration (31) et de la deuxième ouverture d'aspiration (31) sont dimensionnées différemment sur les éléments de paroi (24) amovibles disponibles au choix et/ou où, parmi la première ouverture d'aspiration (31) et la deuxième ouverture d'aspiration (31) des éléments de paroi (24) amovibles disponibles au choix, au moins une ouverture d'aspiration (31) est positionnée différemment sur la paroi de conduite (22) en cas de liaison amovible des éléments de paroi (24) avec la partie de paroi (23) de la paroi de conduite (22) montée de manière fixe sur le support de pièce, et
• les largeurs d'ouverture des sections transversales d'écoulement de la première ouverture d'aspiration (31) de la conduite d'aspiration (21) et de la deuxième ouverture d'aspiration (31) de la conduite d'aspiration (21) et/ou la position d'au moins une des ouvertures d'aspiration (31) sur la conduite d'aspiration (21) sont à réglage variable, l'un des éléments de paroi (24) amovibles disponibles au choix pouvant sélectivement être relié de manière amovible à la partie de paroi (23) de la paroi de conduite (22) de la conduite d'aspiration (21), montée de manière fixe sur le support de pièce.

7. Support de pièce selon la revendication 5 et la revendication 3 **caractérisé en ce que**
• la deuxième ouverture d'aspiration (31) de la conduite d'aspiration (21) est formée par deux deuxièmes ouvertures de passage (38, 39) présentant chacune une section transversale d'écoulement, où, parmi les deuxièmes ouvertures de passage (38, 39), l'une des deuxièmes ouvertures de passage (38) est prévue sur la paroi de conduite (22) de la conduite d'aspiration (21) et l'autre deuxième ouverture de passage (39) est prévue sur l'élément de réglage (33) voisin de la paroi de conduite (22) de la conduite d'aspiration (21) dans la direction d'écoulement du flux d'air d'évacuation, où les deuxièmes ouvertures de passage (38, 39) prévues sur la paroi de conduite (22) de la conduite d'aspiration (21) et sur l'élément de réglage (33) présentent un recouvrement mutuel dans la direction transversale de la direction d'écoulement du flux d'air d'évacuation et peuvent être traversées par le flux d'air d'évacuation dans la direction d'écoulement,
• la section transversale d'écoulement de la deuxième ouverture d'aspiration (31) de la conduite d'aspiration (21) est formée en tant que section transversale d'écoulement résultante des sections transversales d'écoulement des deux deuxièmes ouvertures de passage (38, 39), et
• les largeurs d'ouverture des sections d'écoulement résultantes de la première ouverture d'aspiration (31) de la conduite d'aspiration (21) et de la deuxième ouverture d'aspiration (31) de la conduite d'aspiration (21) sont à réglage variable, la paroi de conduite (22) de la conduite d'aspiration (21) et l'élément de réglage (33) pouvant être avancés l'un par rapport à l'autre dans la direction d'avance (41), et le recouvrement mutuel des ouvertures de passage (38, 39) existant dans la direction transversale de la direction d'écoulement du flux d'air d'évacuation et le recouvrement mutuel des deux deuxièmes ouvertures de passage (38, 39) existant dans la direction transversale de la direction d'écoulement du flux d'air d'évacuation pouvant ainsi être modifiés.

8. Support de pièce selon la revendication 7 et la revendication 4 **caractérisé en ce que**
• l'autre élément de réglage (34) présente une deuxième ouverture de passage (40), où les deuxièmes ouvertures de passage (38, 39) prévues sur la paroi de conduite (22) de la conduite d'aspiration (21) et sur les éléments de réglage (33, 34) présentant un recouvrement mutuel dans la direction transversale de la direction d'écoulement du flux d'air d'évacuation, et
• les largeurs d'ouverture des sections d'écoulement résultantes de la première ouverture d'aspiration (31) de la conduite d'aspiration (21) et de la deuxième ouverture d'aspiration (31) de la conduite d'aspiration (21) sont à réglage variable, la paroi de conduite (22) de la conduite d'aspiration (21) et le premier élément de réglage (33) ainsi que l'autre élément de réglage (34) pouvant être avancés l'un par rapport à l'autre dans la direction d'avance (41), et le recouvrement mutuel, existant dans la direction transversale de la direction d'écoulement du flux d'air d'évacuation, des ouvertures de passage (38, 39, 40) prévues sur la paroi de conduite (22) de la conduite d'aspiration (21) et sur les éléments de réglage (33, 34) et des deuxièmes ouvertures de passage (38, 39, 40) prévues sur la paroi de conduite (22) de la conduite d'aspiration (21) et sur les éléments de réglage (33, 34) pouvant ainsi être modifié.

9. Support de pièce selon l'une des revendications 3, 4, 7, 8, **caractérisé en ce que** la ou les ouvertures de passage (38) prévues sur la paroi de conduite (22) de la conduite d'aspiration (21) d'une part et la ou les ouvertures de passage (39, 40) prévues sur le ou au moins un des éléments de réglage (33, 34) d'autre part et/ou la ou les ouvertures de passage (39, 40) prévues sur l'un des éléments de réglage (33, 34) d'une part et la ou les ouvertures de passage (39, 40) prévues sur l'autre des éléments de réglage (33, 34) d'autre part présentent des géométries de section transversale différentes.

10. Support de pièce selon la revendication 5 et l'une des revendications 6 à 9, **caractérisé en ce que** la conduite d'aspiration (21) est dotée d'ouvertures d'aspiration (31) avec une densité d'ouverture variable dans le sens d'écoulement du flux d'air d'évacuation.

11. Support de pièce selon l'une des revendications précédentes, **caractérisé en ce que**
• le dispositif d'aspiration (14) comprend la conduite d'aspiration (21) comme première conduite d'aspiration (21) et, en plus de la première conduite d'aspiration (21), au moins une autre conduite d'aspiration (21), où la première conduite d'aspiration (21) et l'autre conduite d'aspiration (21) sont associées à différentes zones de surface de l'élément de support (9) de pièce et où, par la première conduite d'aspiration (21) et l'autre conduite d'aspiration (21), un flux d'air d'évacuation peut être évacué du côté pièce (12) de la zone de surface respectivement associée de l'élément de support (9) de pièce, et
• sur au moins l'une des conduites d'aspiration (21), la largeur d'ouverture de la section transversale d'écoulement de la ou des ouvertures d'aspiration (31) et/ou la position de la ou des ouvertures d'aspiration (31) sur la conduite d'aspiration (21) sont à réglage variable.

12. Support de pièce selon la revendication 11 **caractérisé en ce que**
• pour la première conduite d'aspiration (21) et/ou pour l'autre conduite d'aspiration (21), il est prévu un dispositif de blocage (27) pouvant être actionné de manière commandée et pouvant ainsi être amené dans un état de blocage ou dans un état d'ouverture, et
• la première conduite d'aspiration (21) et/ou l'autre conduite d'aspiration (21) sont respectivement séparées du générateur de dépression (15) du dispositif d'aspiration (14) lorsque le dispositif de blocage (27) est à l'état de blocage et sont connectées au générateur de dépression (15) du dispositif d'aspiration (14) lorsque le dispositif de blocage (27) est à l'état d'ouverture.

13. Support de pièce selon la revendication 12, **caractérisé en ce que** le dispositif de blocage (27) présente une première unité (28) de dispositif de blocage associée à la première conduite d'aspiration (21) ainsi qu'une autre unité (28) de dispositif de blocage associée à l'autre conduite d'aspiration (21), et **en ce que** la première unité (28) de dispositif de blocage et l'autre unité (28) de dispositif de blocage peuvent être actionnées et ainsi être passées dans un état de blocage ou dans un état d'ouverture indépendamment l'une de l'autre.

14. Machine d'usinage pour l'usinage de préférence thermique de pièces, dotée d'un dispositif d'usinage (2, 3, 4, 5) ainsi que d'un support de pièce (8) au moyen duquel une pièce peut être supportée pendant l'usinage par le dispositif d'usinage (2, 3, 4, 5),
**caractérisé en ce que**
il est prévu comme support de pièce un support de pièce (8) selon l'une des revendications précédentes.

15. Machine d'usinage selon la revendication 14, dotée d'un support de pièce (8) selon la revendication 13, où le dispositif d'usinage (2, 3, 4, 5) présente une unité d'usinage (5) pour l'usinage d'une pièce supportée au moyen de l'élément de support (9) de pièce du support de pièce (8), qui peut être avancée parallèlement à l'élément de support (9) de pièce dans une position d'usinage, **caractérisée en ce que** la première unité (28) de dispositif de blocage et l'autre unité (28) de dispositif de blocage peuvent être actionnées en fonction de la position d'usinage de l'unité d'usinage (5).
